# EUROPÄISCHE PATENTANMELDUNG

(11) **EP 1 300 557 A2**
(43) Veröffentlichungstag der Anmeldung: **09.04.2003**
(21) Anmeldenummer: 02022012.5
(22) Anmeldetag: 01.10.2002
(51) Int. Cl.: F02B 27/02

(54) **Schaltsaugrohr**

(30) Priorität: 02.10.2001 DE 10148601
(71) Anmelder: Pierburg GmbH, 41460 Neuss (DE)
(72) Erfinder: Sanders, Michael, 41564 Kaarst (DE); Langner, Frank, 52146 Würselen (DE)
(74) Vertreter: von Kirschbaum, Alexander, Dipl.-Ing.

(57) **Zusammenfassung**

Ein Schaltsaugrohr (10) für Brennkraftmaschinen weist einen Ansaugkanal (11) mit einer Kurzschlußöffnung (16) auf. Die Kurzschlußöffnung (16) kann mit einer Schaltklappe (18,18') verschlossen bzw. geöffnet werden. Die Schaltklappe (18) ist durch eine nicht starre Verbindung mit einem Klappenhebel (20) verbunden. Die Verbindung zwischen dem Klappenhebel (20) und der Schaltklappe (18) wird von einer Platte (32) einerseits und einer Kalotte (26) andererseits gebildet. Hiermit wird eine einfach herstellbare und montierbare kippbare Verbindung zwischen der Schaltklappe (18) und dem Klappenhebel (20) hergestellt.

## Beschreibung

Die Erfindung bezieht sich auf ein Schaltsaugrohr für Brennkraftmaschinen.

Schaltsaugrohre werden eingesetzt, um die Füllung der Zylinderräume mit Verbrennungsluft zu verbessern. Dies erfolgt, indem die effektive Saugrohrlänge an die Drehzahl des Motors angepasst wird. Während im unteren Drehzahlbereich ein langes Saugrohr eine gute Aufladung bewirkt, trifft dies für hohe Drehzahlen auf ein kurzes Saugrohr zu. Um die Saugrohrlänge auf einfache Weise an die Motordrehzahl anpassen zu können, werden Schaltsaugrohre mit einer Kurzschußöffnung eingesetzt. Die Kurzschlußöffnung ist in dem Ansaugkanal an seinem zylinderseitigen Ende angeordnet und kann durch eine Schaltklappe geschlossen bzw. geöffnet werden. Durch Öffnen und Schließen der Schaltklappe lässt sich die effektive Länge des Saugrohres verkürzen bzw. verlängern und auf diese Weise an die Motordrehzahl anpassen. Bei einer starren Verbindung der Schaltklappe mit einem Klappenhebel besteht die Gefahr, dass schon bei geringem Verkippen und/oder Verkanten der Schaltklappe auf ihrem Schließsitz die Kurzschlußöffnung nicht mehr vollständig geschlossen werden kann. Aus DE 197 14 311 ist ein Schaltsaugrohr bekannt, bei dem die Schaltklappe durch ein Kugelgelenk in engen Grenzen kippbar an dem Klappenhebel befestigt ist. Das Kugelgelenk wird von einer Kugelkalotte in einem entsprechenden Hohlraum gebildet. Die Kugelkalotte weist einen schmalen Kalottenhals auf, der bruchanfällig ist. Ferner sind die Kugelkalotte und der entsprechende Hohlraum des Gegenstücks aufwändig in der Herstellung.

Aufgabe der Erfindung ist es, eine einfache, nicht-starre Verbindung des Klappenhebels mit der Schaltklappe zu schaffen.

Diese Aufgabe wird erfindungsgemäß gelöst mit den Merkmalen des Patentanspruchs 1.

Bei dem erfindungsgemäßen Schaltsaugrohr wird die Verbindung zwischen dem Klappenhebel und der Schaltklappe von einer Platte einerseits und einer Kalotte andererseits gebildet, durch die in der Schließposition der Schaltklappe die Schließkraft von dem Klappenhebel auf die Schaltklappe bei jedem Kippwinkel übertragen wird. Die Platten-Kalotten-Anordnung dient nur der Übertragung von Druckkräften von dem Klappenhebel auf die Schaltklappe, dient jedoch nicht zum Halten der Schaltklappe an dem Klappenhebel.

Die konvexe Kalotte nimmt einen Raumwinkel von weniger als 180° ein und weist daher keine die Festigkeit der Befestigung der Kalotte an der Schaltklappe bzw. dem Klappenhebel schwächende Einschnürung auf. Da die Kalotte hinterschneidungsfrei an der Schaltklappe bzw. dem Klappenhebel befestigt ist, ist ihre Herstellung einfach und preiswert realisierbar. Das gleiche gilt für das Gegenstück der Kalotte, nämlich die Platte, die eben oder allenfalls mit einem großen Radius konkav gewölbt ausgebildet ist. Auch die Platte kann mit einfachen Mitteln preiswert hergestellt werden. Die Kalotte und die Platte müssen auch keine besondere Präzision aufweisen, um eine gute Kippbarkeit der Schaltklappe gegenüber dem Klappenhebel zu gewährleisten. Durch die Kippbarkeit wird sichergestellt, dass sich die Schaltklappe spaltfrei auf den Öffnungssitz der Kurzschlußöffnung legen kann. Hierdurch wird sichergestellt, dass die Kurzschlußöffnung vollständig verschlossen werden kann, so dass kein unerwünschter Kurzschluss auftritt.

Gemäß einer bevorzugten Ausgestaltung weist die Schaltklappe die Kalotte und der Klappenhebel die Platte auf. Grundsätzlich kann jedoch auch die Schaltklappe die Platte und der Klappenhebel die Kalotte aufweisen.

Gemäß einer bevorzugten Ausgestaltung ist die Kalotte ungefähr im Flächenschwerpunkt der Schaltklappe angeordnet. Hierdurch wird sichergestellt, dass die Schließkraft von dem Klappenhebel auf die Schaltklappe stets ungefähr in der Mitte der Schaltklappe aufgebracht wird. Hierdurch wird über den gesamten Umfang des Schließsitzes ungefähr der gleiche Druck aufgebracht, so dass eine gute Abdichtung über den gesamten Umfang erzielt wird.

Gemäß einer bevorzugten Ausgestaltung ist die Kalotte einstückig mit der Schaltklappe ausgebildet. Eine separate Anfertigung eines Verbindungsteils und anschließende Montage an der Schaltklappe kann daher entfallen.

Vorzugsweise ist die Kalottenhöhe derart gewählt, dass der Schaltklappen-Kippwinkel mindestens 1,0° in jede Richtung beträgt. Hierdurch wird sichergestellt, dass Unebenheiten des Schließsitzes oder montage- und/oder wärmebedingte Veränderungen der Stellung der Schaltklappe bzw. der Kurzschlußöffnung im Raum ausgeglichen werden können.

Gemäß einer bevorzugten Ausgestaltung weist die Schaltklappe eine die Kalotte beinhaltende Stecktasche auf, in die die Klappenhebel-Platte eingesteckt ist. Durch die Kalotte und die gegenüberliegende Platte können nur Druckkräfte übertragen werden. Zum Halten der Schaltklappe an dem Klappenhebel und für eine einfache Montage weist die Schaltklappe daher an ihrer Rückseite die Stecktasche auf, in die die an dem Klappenhebel angebrachte Platte eingesteckt ist. Zur Montage der Schaltklappe an den Klappenhebel wird die Klappenhebelplatte einfach in die Stecktasche der Schaltklappe eingesteckt und mit einem Rast- oder Befestigungsmittel vor dem ungewünschten Abfallen von der Klappenhebelplatte gesichert. Hierdurch wird eine einfache Montierbarkeit bzw. Demontierbarkeit gewährleistet.

Gemäß einer bevorzugten Ausgestaltung ist zwischen der Plattenrückseite und einer Stecktaschenwand ein elastisches Spannelement angeordnet. Das Spannelement kann ein einfacher elastischer Druckkörper sein, durch den die Klappenhebel-Platte gegen die Schaltklappen-Kalotte gedrückt wird. Ferner wird durch das Spannelement die Klappenhebel-Platte in der Stecktasche verklemmt, so dass ein unerwünschtes Herausrutschen der Klappenhebel-Platte aus der Stecktasche vermieden wird.

Im folgenden wird unter Bezugnahme auf die Zeichnungen ein Ausführungsbeispiel der Erfindung näher erläutert.

Es zeigen:
- Fig. 1: einen Abschnitt eines Schaltsaugrohres mit einer Kurzschlußöffnung und einer Schaltklappe im Längsschnitt und
- Fig. 2: den Schaltsaugrohr-Abschnitt und die Schaltklappe der Fig. 1 in Draufsicht.

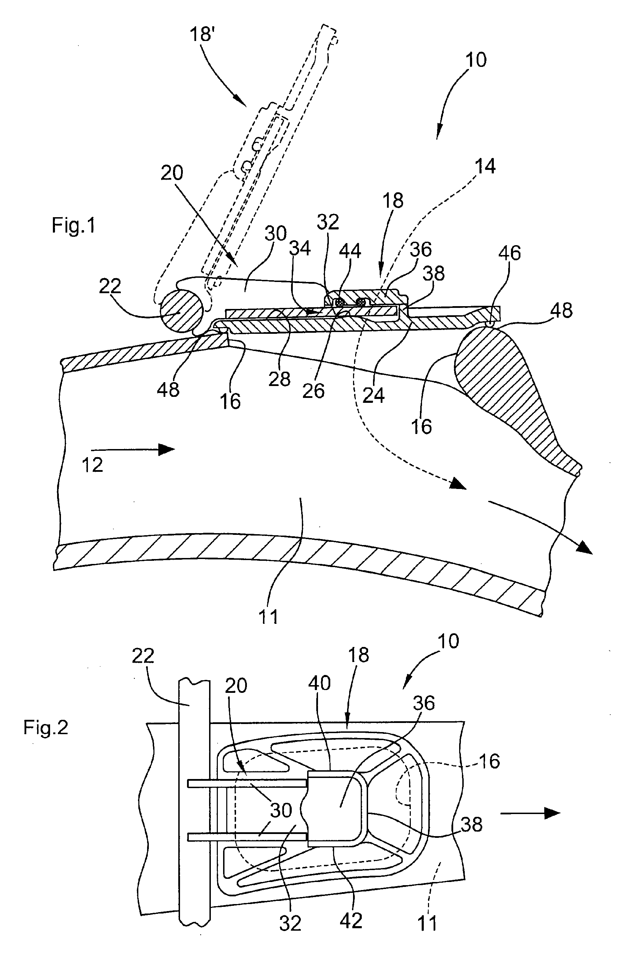

In den Fign. 1 und 2 ist ein Abschnitt eines Schaltsaugrohres 10 eines mehrere Schaltsaugrohre umfassenden Luftansaugkanalsystems für eine mehrzylindrische Brennkraftmaschine dargestellt. Über das Schaltsaugrohr 10 wird einem Zylinder der Brennkraftmaschine Verbrennungsluft zugeführt, und zwar über einen langen Ansaugweg 12 oder über einen kurzen Ansaugweg 14. Das Schaltsaugrohr 10 weist hierzu an seinem zylinderseitigen Abschnitt eine Kurzschlußöffnung 16 auf, die durch eine Schaltklappe 18 verschließbar ist. Die Schaltklappe 18 ist an einem Klappenhebel 20 befestigt, der fest an einer drehbaren Hebelwelle 22 befestigt ist.

Bei niedrigen Drehzahlen der Brennkraftmaschine ist die Schaltklappe 18 in ihrer Schließstellung und verschließt die Kurzschlußöffnung 16. Die angesaugte Luft gelangt ausschließlich über den langen Ansaugweg 12 in den Zylinder der Brennkraftmaschine. Bei höheren Drehzahlen wird die Schaltklappe 18 in ihre Offenstellung 18' geschwenkt. Dies erfolgt durch einen entsprechenden Wellenantrieb, durch den die Hebelwelle 22 um ca. 40° gedreht werden kann, wodurch die Schaltklappe 18 in ihre Offenstellung geschwenkt wird. In der Offenstellung der Schaltklappe 18' kann die Ansaugluft auf dem kurzen Ansaugweg 14 in das Schaltsaugrohr gelangen. Bei niedrigen Drehzahlen wird die Hebelwelle 22 durch ihren Antrieb wieder zurückgedreht und die Schaltklappe 18 in ihre Schließstellung geschwenkt.

Die Schaltklappe 18 wird von einem Plattenkörper 24 gebildet, der mittig und auf der Kanalaußenseite eine Kalotte 26 aufweist. Die Kalotte 26 nimmt einen Raumwinkel von ungefähr 30° ein, hat einen Radius von ungefähr 15 mm und ragt ungefähr 1,0 mm aus der rückseitigen Oberfläche 28 der Schaltklappe 18 heraus.

Der Klappenhebel 28 wird von zwei parallel zueinander beabstandeten Hebelblättern 30 und einer von den beiden Hebelblättern 30 in einer Querebene gehaltenen Platte 32 gebildet. Die Platte 32 ragt radial nach außen über die radialen Enden der beiden Hebelblätter 30 hinaus. Der hinausragende Teil der vollständig ebenen und planen Platte 32 ist in eine Stecktasche 34 eingesteckt, die von einem Stecktaschendeckel 36 mit entsprechenden Stecktaschen-Seitenwänden 38,40,42 gebildet wird. Der Stecktaschendeckel 36 bzw. die Stecktaschen-Seitenwände sind mit dem Klappenkörper 24 verschweißt.

Auf der Innenseite des Stecktaschendeckels 36 ist als elastisches Spannelement ein gummielastischer Elastomerring 44 befestigt, durch den die Platte 32 auf die Kalotte 26 gedrückt wird und ferner die Platte 32 in der Stecktasche 34 fest verklemmt ist.

Der Plattenkörper 24 weist eine umlaufende gummielastische Dichtungslippe 46 auf, die bei geschlossener Schaltklappe 18 auf den umlaufenden Schließsitz 48 der Kurzschlußöffnung 16 gedrückt wird.

Die Kalottenhöhe und die Stecktaschenmaße sind so gewählt, dass sich ein Schwenkwinkel der Schaltklappe 18 gegenüber der Hebelplatte 32 von ca. 1,0° ergibt bzw. eine Schwenkbewegung von ca. 0,5 mm an jeder Ecke der Schaltklappe 18 zulassen.

Damit ist eine auf einfache Weise herstellbare und montierbare, in einem kleinen Bereich kippbare Schaltklappen-Klappenhebel-Anordnung geschaffen.

## Patentansprüche

1. Schaltsaugrohr für Brennkraftmaschinen, mit
einem Ansaugkanal (11) mit einer Kurzschlußöffnung (16),
einer Schaltklappe (18) zum Verschließen und Öffnen der Kurzschlußöffnung (16) und
einem angetriebenen und mit der Schaltklappe (18) durch eine nicht starre Verbindung verbundenen Klappenhebel (20) zur Betätigung der Schaltklappe (18),
**dadurch gekennzeichnet,**
**dass** die Verbindung von einer Platte (32) einerseits und einer Kalotte (26) andererseits gebildet wird.

2. Schaltsaugrohr nach Anspruch 1, **dadurch gekennzeichnet, dass** die Schaltklappe (18) die Kalotte (26) und der Klappenhebel (20) die Platte (32) aufweist.

3. Schaltsaugrohr nach Anspruch 2, **dadurch gekennzeichnet, dass** die Kalotte (26) einstückig mit der Schaltklappe (18) ausgebildet ist.

4. Schaltsaugrohr nach Anspruch 2 oder 3, **dadurch gekennzeichnet, dass** die Kalotte (26) ungefähr in der Mitte der Schaltklappe (18) angeordnet ist.

5. Schaltsaugrohr nach einem der Ansprüche 1-4, **dadurch gekennzeichnet, dass** die Kalottenhöhe derart gewählt ist, dass der Schaltklappen-Kippwinkel mindestens 1,0° in jede Richtung beträgt.

6. Schaltsaugrohr nach einem der Ansprüche 2-5, **dadurch gekennzeichnet, dass** die Schaltklappe (18) eine die Kalotte (26) beinhaltende Stecktasche (34) aufweist, in die die Klappenhebel-Platte (32) eingesteckt ist.

7. Schaltsaugrohr nach Anspruch 6, **dadurch gekennzeichnet, dass** zwischen der Plattenrückseite und einer Stecktaschenwand (36) ein elastisches Spannelement (44) angeordnet ist, das die Platte (32) auf die Kalotte (26) drückt.
